# EUROPEAN PATENT SPECIFICATION

(11) **EP 0 529 806 B1**
(45) Date of publication and mention of the grant of the patent: **26.03.1997**
(21) Application number: 92306849.8
(22) Date of filing: 27.07.1992
(51) Int. Cl.: B44C 1/17, B44C 1/10

(54) **Mounting of objects using pressure sensitive adhesive**
Montieren von Gegenständen unter Verwendung eines druckempfindlichen Klebestoffes
Montage d'objets en utilisant un adhésive sensible à la pression

(30) Priority: 24.08.1991 GB 9118345
(43) Date of publication of application: 03.03.1993
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50725 Köln (DE); FORD MOTOR COMPANY, Dearborn, MI 48126 (US)
(72) Inventor: Nutt, Kenneth George, Hornchurch, Essex (GB); Pinckney, Ronald, Dagenham, Essex (GB)
(74) Representative: Messulam, Alec Moses

(56) References cited:
- FR-A- 2 078 259
- FR-A- 2 210 150
- FR-A- 2 240 114

## Description

This invention relates to an apparatus for and a method of mounting objects on a surface using a pressure sensitive adhesive. The invention is particularly, but not exclusively, applicable to the mounting of decorative badges on motor vehicle body panels. However other applications will be readily apparent to those skilled in the art.

The manufacturer's name badge and/or model designations are conventionally provided in the form of badges with a rigid body and a pressure sensitive adhesive pad stuck to the back. One side of the adhesive pad sticks to the badge itself, and the other side can be stuck to a surface such as a vehicle body panel.

The adhesion performance of a pressure sensitive adhesive depends to a large extent on the pressure which is applied between the adhesive and the surface to which it is to be stuck. The higher the pressure, the better the bond. It is often difficult to apply a sufficiently high pressure to achieve a good bond on a body panel, without risking denting the panel. In order to improve the bond, the adhesive is often heated to an above ambient temperature before application.

French patent specification 2 540 441 describes a device for mounting decorative adhesive motifs onto a vehicle body panel. The motifs are flexible, and the object of the device described is to prevent damage to the motif and to prevent the occurrence of air blisters between the motif and the panel. In order to avoid damage to the motif, the motif is held against a seat of resilient open-cell foam.

It is an object of the present invention to improve the fixing of objects, especially substantially rigid objects such as decorative badges, to a surface by means of a pressure sensitive adhesive.

According to the present invention, there is provided apparatus for applying an object which has a pressure sensitive adhesive backing to a surface, the apparatus comprising a support plate, means for locating and temporarily securing the object to the support, a compressible impermeable wall surrounding the locating means and arranged so that when the apparatus is placed against a surface, a closed vacuum chamber is bounded by the plate, the surface and the impermeable wall, and means for evacuating the vacuum chamber so that the plate and the body panel are drawn together, characterised in that the support is in the form of a rigid plate.

By evacuating the vacuum chamber thus formed, the result is achieved that atmospheric pressure acting outside the vacuum chamber effectively pushes the surface and the plate (which carries the object) towards one another with equal and opposite pressures. This therefore avoids any risk of eg denting a body panel, whilst at the same time allowing because of the rigidity of the plate which forms the support, the achievement of a very high force between the object and the surface.

According to a second aspect, the invention provides a method of applying an object which has a pressure sensitive adhesive backing to a surface, the method comprising the steps of locating the object on a support, forming a closed chamber between the support and the surface, the closed chamber including the object which has its pressure sensitive adhesive backing facing the surface, and evacuating the chamber to draw together the object and the surface, characterised in that the support is in the form of a rigid plate.

In a preferred embodiment, the means for locating and temporarily securing the object to the plate comprises a second vacuum chamber.

The compressible impermeable wall is preferably formed by a closed-cell foam.

A vacuum pump is preferably connected to the vacuum chamber to evacuate the vacuum chamber.

The apparatus and the method may be adapted to apply a badge to a vehicle body panel. In the context of this specification, the term "badge" means a rigid, three-dimensional body. The apparatus then preferably includes means for aligning the apparatus with the body panel so that the badge can be stuck onto the same place on the body panel of each vehicle.

The invention will now be further described, by way of example, with reference to the accompanying drawings, in which:
Figure 1 is a partial rear view of a motor vehicle showing a badge adhered to a tailgate;
Figure 2 is a perspective rear view of a badge showing the pressure sensitive adhesive;
Figure 3 is a perspective view of a tool forming part of an apparatus in accordance with the invention;
Figure 4 is a side view through the apparatus of Figure 3, ready for use; and
Figure 5 is a view corresponding to Figure 4 but showing the apparatus in operation.

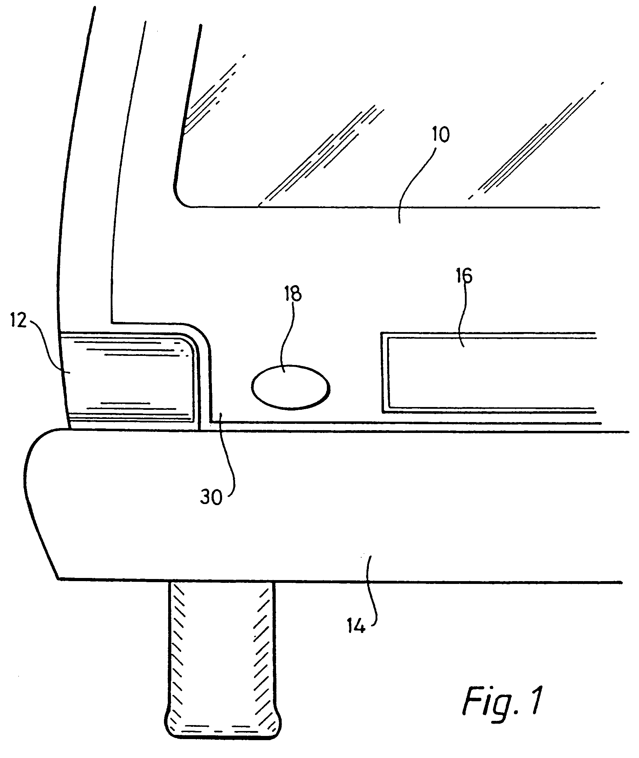

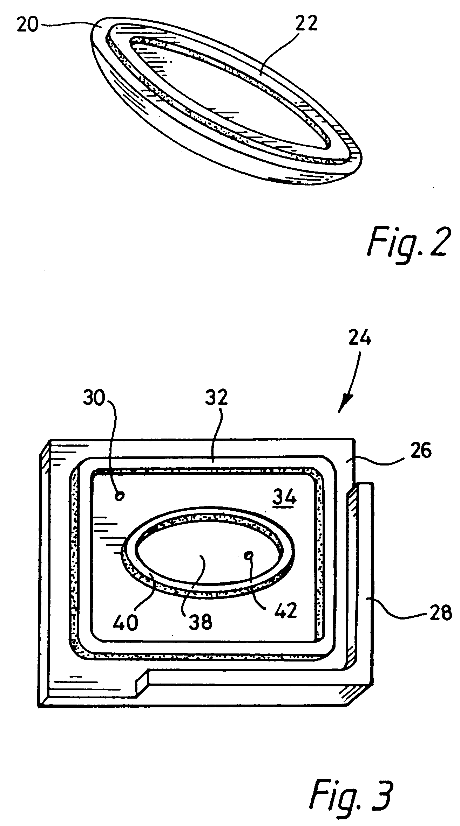

Figure 1 shows the rear quarter of a car with a tailgate 10, a rear light cluster 12, a rear bumper 14 and a licence plate 16. A manufacturer's name badge is mounted on the tailgate 10 at 18. Figure 2 shows the rear of the badge before application to the tailgate. The badge itself is a rigid, oval plastic body 20 with an annular oval adhesive pad 22. The pad 22 is adhered to the back of the badge 20 and has an exposed face coated with adhesive. This exposed face is normally protected by a backing sheet until the badge is ready to be stuck onto the tailgate.

Figure 3 shows a tool 24 which is used for sticking the badge on. The device consists of a rigid back plate 26 with an extended, right-angled wall 28 which will be used to locate the plate against the bottom corner 30 of the tailgate. The rigid plate 26, which may be a fibreglass moulding, has a first circumferential wall 32 of closed-cell foam. This wall 32 defines a main vacuum chamber 34. The chamber 34 can be evacuated through an opening 36.

Within the vacuum chamber 34 is a second vacuum chamber 38 surrounded by a second wall 40, again of closed-cell foam. The second vacuum chamber can be evacuated through an opening 42.

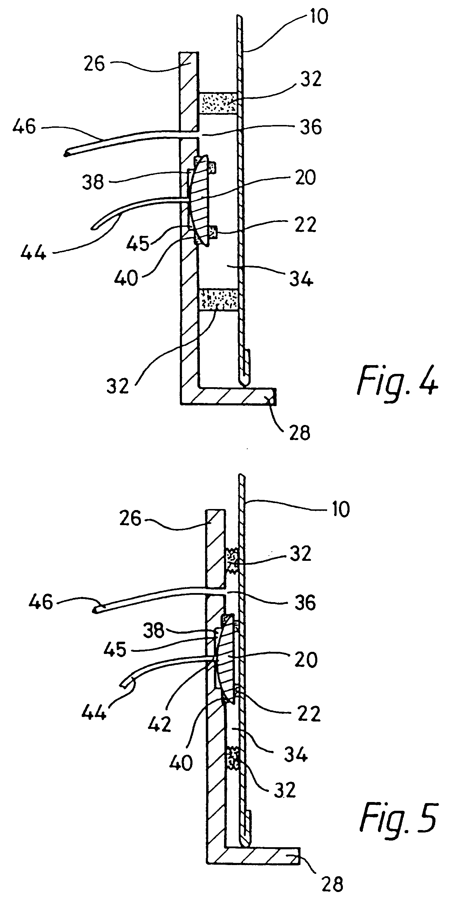

In use, the badge 20 is placed with its face on the wall 40, and vacuum is applied through the hole 42 to evacuate the chamber 38. This holds the badge against the plate 26. This plate has a recess 45 (see Figures 4 and 5) into which the raised front face of the badge will be received.

At this point the apparatus appears as shown in Figure 4. The vacuum line 44 maintains a sub-atmospheric pressure to keep the badge 20 in place. The apparatus is then offered up to the tailgate 10 so that the corner 30 fits into the corner of the right-angled wall 28. This then locates the badge position relative to the tailgate. The walls 32 (which at this stage are uncompressed) are placed against the surface of the tailgate to close and seal the vacuum chamber 34.

Next, vacuum is applied through the line 46 to evacuate the chamber 34. This results in the tailgate 10 and plate 26 being drawn towards one another so that the pressure sensitive adhesive pad 22 is pressed firmly against the tailgate. Once the desired level of vacuum has been reached in the chamber 34, the vacuum in the line 44 is released (to release the badge) and then the vacuum in the line 46 is released (to release the apparatus from the tailgate). The badge is then securely attached to the tailgate.

The apparatus described here is particularly suitable for use on a motor vehicle assembly line, where badges have to be applied to vehicles moving past an operator along the line. The apparatus may include tools 24 for applying badges at the front and back of the vehicle and, if desired, at other places also.

The entire apparatus is preferably mounted on a workstation which can move alongside the assembly line. The workstation can include the vacuum source and can also carry a container for storing badges ready for use.

It is convenient if the workstation has a mechanism by which it can be locked to a vehicle as the vehicle moves along the assembly line, and this mechanism can be vacuum operated.

A suction cup can be fed with vacuum so that it is attached to the side of the vehicle, and then the workstation will move with the vehicle whilst the badges are being applied. Once badge application has been finished, the vacuum holding the suction cup to the vehicle can be released and the workstation will then separate itself from the vehicle and can be moved back along its path of movement ready to engage the next vehicle on the line.

Once the workstation has been attached to the vehicle, a badge can be located in the recess 45 of each tool 24, and any backing paper on the adhesive pad 22 will be removed. At this stage the vacuum to the chamber 38 is effective and will provide a light retention force to hold the badge in position.

The tool is then offered up to the vehicle to engage with the appropriate features on a body panel, and a switch is operated to introduce vacuum to the chamber 34. This vacuum is at a higher level than the vacuum in the chamber 38, and provides a substantial force drawing the back plate and the body panel towards one another. The back plate and the body panel cannot however come into contact with one another because the rear face of the badge 20 stands proud of the back plate 24, and as a result the adhesive pad 22 on the badge will be firmly pressed against the body panel to activate the pressure sensitive adhesive.

The tool is then left in position to allow the vacuum in the chamber 34 to build up to the desired level. Once this vacuum has been reached (or after a predetermined time interval) the vacuum feed to the chamber 34 is switched off and the chamber is vented through a suitable valve. The tool is then removed and put to one side. The vacuum holding the work station to the vehicle is then also released so that operation can be transferred to the next vehicle on the assembly line.

As indicated earlier in this specification, the invention is not restricted to the application of badges to motor vehicle body panels. It can also be used for attaching body side mouldings to the side panels of a motor vehicle or for attaching a rear view mirror to the inside of a windscreen. Further applications, both within and outside the automotive field, will be appreciated by those skilled in the art.

The apparatus described here allows very effective attachment of badges to body panels of motor vehicles, with easy and accurate alignment, without requiring great accuracy on the part of the operator.

## Claims

1. Apparatus for applying an object (20) which has a pressure sensitive adhesive backing (22)to a surface (10), the apparatus comprising a support (24), means (38, 40, 42) for locating and temporarily securing the object to the support (24), a compressible impermeable wall (32) surrounding the locating means and arranged so that when the apparatus is placed against the surface (10), a closed vacuum chamber (34) is bounded by the support (24), the surface (10) and the impermeable wall (32), and means (30) for evacuating the vacuum chamber so that the support (24) and the surface (10) are drawn together, characterised in that the support (24) comprises a rigid plate (26).

2. Apparatus as claimed in Claim 1, wherein the compressible impermeable wall is formed by a continuous strip of closed cell foam (32).

3. Apparatus as claimed in Claim 1 or Claim 2, wherein the means for temporarily locating the object comprises a second vacuum chamber (38) arranged within the first vacuum chamber (34).

4. Apparatus as claimed in Claim 3, wherein the second vacuum chamber is also bounded by a wall (40) of compressible, impermeable material.

5. Apparatus as claimed in any preceding claim, wherein the back plate (26) has a recess (45) adapted to receive the object (20), the recess having a bottom face arranged to contact the front face of an object in the recess such that the back face of the object lies proud of the surface of the back plate.

6. A workstation incorporating apparatus as claimed in any preceding claim, the workstation being adapted to be mounted on a rail alongside an assembly line and having vacuum operated means by which it can be temporarily connected to an article on the assembly line, for movement with that article.

7. A workstation as claimed in Claim 6 which incorporates a plurality of apparatuses as claimed in any one of Claims 1 to 5, all the apparatuses being connected to a common vacuum source.

8. A method of applying an object (20) which has a pressure sensitive adhesive backing (22) to a surface (10), the method comprising the steps of locating the object on a support (24), forming a closed chamber (34) between the support and the surface, the closed chamber including the object which has its pressure sensitive adhesive backing facing the surface, and evacuating the chamber to draw together the object (20) and the surface (10), characterised in that the support (24) comprises of a rigid plate (26).

## Patentansprüche

1. Eine Apparatur für die Befestigung eines Objekts (20) mit einer Haftklebstoffrückseite (22) auf einer Oberfläche (10), wobei die Apparatur eine Unterlage (24), Vorrichtungen (38, 40, 42) für die Ausrichtung und die zeitweilige Befestigung des Objektes auf der Unterlage (24), eine komprimierbare, undurchlässige Wand (32), die die ausrichtende Vorrichtung umgibt und so angeordnet ist, daß, wenn die Apparatur gegen die Oberfläche (10) plaziert wird, eine geschlossene Vakuumkammer (34) gebildet wird, die durch die Unterlage (24), die Oberfläche (10) und die undurchlässige Wand (32) begrenzt wird, und eine Vorrichtung (30) zum Evakuieren der Vakuumkammer umfaßt, so daß die Unterlage (24) und die Oberfläche (10) aneinander gezogen werden, dadurch gekennzeichnet, daß die Unterlage (24) eine starre Platte (26) umfaßt.

2. Eine Apparatur nach Anspruch 1, worin die komprimierbare, undurchlässige Wand aus einem zusammenhängenden Band aus geschlossenzelligem Schaumstoff (32) hergestellt ist.

3. Eine Apparatur nach Anspruch 1 oder 2, worin die Vorrichtungen für die zeitweilige Ausrichtung des Objektes eine zweite Vakuumkammer (38) umfaßt, die in der ersten Vakuumkammer (34) angeordnet ist.

4. Eine Apparatur nach Anspruch 3, worin auch die zweite Vakuumkammer durch eine Wand (40) aus komprimierbarem, undurchlässigem Material begrenzt ist.

5. Eine Apparatur nach irgendeinem der vorhergehenden Ansprüche, worin die hintere Platte (26) eine Vertiefung (45) besitzt, die daran angepaßt ist, den Gegenstand (20) aufzunehmen, wobei die Vertiefung eine untere Fläche besitzt, die so angeordnet ist, daß sie die Vorderseite eines Gegenstandes in der Vertiefung berührt, so daß die Rückseite des Gegenstandes die Oberfläche der hinteren Platte überragt.

6. Eine Arbeitsstation, die die Apparatur nach irgendeinem der vorhergehenden Ansprüche einschließt, wobei die Arbeitsstation angepaßt ist, auf einer Schiene entlang der Montagestrecke befestigt zu werden, und mit Vakuum arbeitende Vorrichtungen besitzt, mit denen sie vorübergehend mit einem Gegenstand auf der Montagestrecke verbunden werden kann, um sich gemeinsam mit diesem Gegenstand zu bewegen.

7. Eine Arbeitsstation nach Anspruch 6, die eine Vielzahl von Apparaturen nach irgendeinem der Ansprüche 1 bis 5 einschließt, wobei alle Apparate an einer gemeinsamen Vakuumquelle angeschlossen sind.

8. Ein Verfahren zum Befestigen eines Gegenstandes (20), der eine Haftklebstoffrückseite (22) besitzt, auf einer Oberfläche (10), wobei das Verfahren die Schritte des Anordnens des Gegenstandes auf einer Unterlage (24) umfaßt sowie den des Herstellens einer geschlossenen Kammer (34) zwischen der Unterlage und der Oberfläche, wobei die geschlossene Kammer den Gegenstand beinhaltet, dessen Haftklebstoffrückseite der Oberfläche zugewandt ist, und den des Evakuierens der Kammer, um den Gegenstand (20) und die Oberfläche (10) aneinander zu ziehen, dadurch gekennzeichnet, daß die Unterlage (24) eine starre Platte (26) umfaßt.

## Revendications

1. Dispositif permettant d'appliquer un objet (20), qui comporte une couche déposée d'adhésif de contact (22), sur une surface (10), le dispositif comprenant un support (24), des moyens (38, 40, 42) permettant de positionner et de fixer temporairement l'objet au support (24), une paroi imperméable compressible (32) entourant les moyens de positionnement et conçue de telle manière que, lorsque le dispositif est placé contre la surface (10), une chambre de dépression fermée (34) est délimitée par le support (24), la surface (10) et la paroi imperméable (32), et un moyen (30) permettant d'évacuer la chambre de dépression de façon que le support (24) et la surface (10) soient rapprochés l'un de l'autre, caractérisé en ce que le support (24) comprend une plaque rigide (26).

2. Dispositif selon la revendication 1, dans lequel la paroi imperméable compressible est formée par un ruban continu de mousse à alvéoles fermés (32).

3. Dispositif selon la revendication 1 ou la revendication 2, dans lequel les moyens permettant de positionner temporairement l'objet comprennent une seconde chambre de dépression (38) agencée à l'intérieur de la première chambre de dépression (34).

4. Dispositif selon la revendication 3, dans lequel la seconde chambre de dépression est également délimitée par une paroi (40) de matériau imperméable, compressible.

5. Dispositif selon l'une quelconque des revendications précédentes, dans lequel la plaque d'appui (26) comporte un évidement (45) conçu pour recevoir l'objet (20), l'évidement ayant une face de fond conçue pour venir en contact avec la face avant d'un objet placé dans l'évidement, de façon que la face arrière de l'objet dépasse de la surface de la plaque d'appui.

6. Poste de travail incorporant un dispositif selon l'une quelconque des revendications précédentes, le poste de travail étant conçu pour être monté sur un rail le long d'une chaîne de montage, et comportant des moyens commandés par dépression grâce auxquels il peut être temporairement relié à un article présent sur la chaîne de montage, afin de se déplacer avec cet article.

7. Poste de travail selon la revendication 6 qui Incorpore une pluralité de dispositifs selon l'une quelconque des revendications 1 à 5, tous les dispositifs étant reliés à une source de dépression commune.

8. Procédé d'application d'un objet (20), qui comporte une couche déposée d'adhésif de contact (22), sur une surface (10), le procédé comprenant les étapes consistant à positionner l'objet sur un support (24), former une chambre fermée (34) entre le support et la surface, la chambre fermée renfermant l'objet dont la couche d'adhésif de contact fait face à la surface, et évacuer la chambre afin d'attirer l'un vers l'autre l'objet (20) et la surface (10), caractérisé en ce que le support (24) comprend une plaque rigide (26).
